# EUROPEAN PATENT APPLICATION

(11) **EP 3 421 153 A1**
(43) Date of publication of application: **02.01.2019**
(21) Application number: 17177961.4
(22) Date of filing: 26.06.2017
(51) Int. Cl.: B21K 1/06, B21C 23/20, F16C 3/02

(54) **FORGING METHOD, ROTOR SHAFT AND ELECTRIC MOTOR**

(71) Applicant: ThyssenKrupp Metalúrgica Campo Limpo Ltda., 13231-900 Campo Limpo Paulista-SP (BR); thyssenkrupp AG, 45143 Essen (DE)
(72) Inventor: Bellodi, José Segundo, 13209-650 Jundiai-SP, CEP (BR)
(74) Representative: Kilchert, Jochen

(57) **Abstract**

This disclosure relates to a forging method for forming at least one of multiple parts of a rotor shaft using the technique of backward extrusion; thus allowing for increased robustness, reduced manufacturing cost and the formation of rotor shafts with complex geometries. Furthermore, the forged parts which are produced as a result of the method of this disclosure may be combined in a joinable manner, either directly or indirectly with further parts, to form a rotor shaft. This rotor shaft is further used as, for example, being suitable for an electric motor.

## Description

### Technical Field

This disclosure relates to a method for manufacturing a rotor shaft.

### Background Art

Rotor shafts are used in a variety of different mechanical systems but are most commonly used as an integral part, positioned along the central axis, of turbines or electrical motors. The rotor shaft represents a particularly safety critical component within any turbine or electrical motor system and must withstand a range of loads depending on use. Conventionally, rotor shafts are manufactured as a single component; for example, a rotor shaft may be machined conventional techniques such as from a single bar using shaft geometry. As the necessity and desire for complex shaft geometries have increased, the forming of a rotor shaft with complex geometry from a single part, such as a bar, requires a large number of conventional machining processes and as such, producing these single part rotor shafts with a complex geometry is no longer possible at a competitive price compared to an assembled solution.

### Related Art Documents

### Patent Documents

| | |
|---|---|
| Patent Document 1 | US Patent Application Publication US 2009/0013531 A1 |
| Patent Document 2 | DE Patent Application Publication DE 10244513 A1 |

Single part and multiple part forging processes, for the formation of pistons and their skirts, which attempt to tackle some of the above problems can be seen in Patent Documents 1 and 2 respectively. Patent Document 1 discloses using a punch to enact the principle of backward extrusion thus forming a single-piece piston skirt with dimensions close to the desired final dimensions. The piston part within Patent Document 1 is then finished using conventional machining techniques. The aim of Patent Document 1 is to use the process of backward extrusion to provide a single-part piston which has a reduced weight compared to other single-part piston components; this is achieved by providing recesses formed in the outer walls during the forging process. Although Patent Document 2 envisages the formation of a multi-part piston, a single-part piston skirt is again used and combined with a further piston part to form the multi-part piston. Similar to Patent Document 1, Patent Document 2 forms upper and lower piston parts, only one of which is a piston skirt, using a punch to compress a billet subsequently shaping said billet into the desired piston parts of the multi-part piston. The aim of Patent Document 2, however, is to form, using a method, a piston which is stable under high ignition pressures and temperatures that occur in modern engines; this is achieved by providing supporting ribs within cooling channels of the multi-part piston.

Each of the methods outlined in Patent Documents 1 and 2 suffer from the deficiency that there is increased difficulty in producing rotor shaft with complex geometries.

It is thus an objective of the present disclosure to provide a forging method which uses backward extrusion to manufacture at least one rotor shaft parts which may have complex geometries and can be joined together to form a complete rotor shaft, which may then be implemented, for example, as part of an electric motor.

### Summary

The present disclosure relates to a forging method for the manufacture of a plurality of parts of a rotor shaft. The method comprises inserting a first billet into at least one forging die which then is pressed by at least one punch such that the a first rotor shaft part is formed, having outer walls, using backward extrusion of the first billet material moving around the at least one punch; this material may move in opposition to the direction of pressing of the punch and cause the outer walls of the rotor shaft to extend along the sides of the punch between the punch and forging die cavity walls. The method may comprise forming a second rotor shaft part in a similar or the same way as the first.

The method may also include joining the first and second rotor shaft parts either directly or indirectly. The forging method aims to use backward extrusion to manufacture a plurality of rotor shaft parts which may have complex geometries and can be joined together to form a complete rotor shaft, while providing increased safety in tolerance maintenance, reducing the number of manufacturing processes and accounting for complex rotor shaft geometries.

The invention has advantages including increased robustness, reduced manufacturing cost and the formation of rotor shafts with complex geometries. Furthermore, the forged parts which are produced as a result of the method of this disclosure may be combined in a joinable manner, either directly or indirectly with further parts, to form a rotor shaft. This rotor shaft is further used as, for example, being suitable for an electric motor. An additional advantage of backward extrusion in combination with the use of a plurality of rotor shaft parts is the increased part precision.

Further advantageous effects of the present disclosure can be found within the dependent claims. The plurality of punches used within the method may increase in length and diameter to allow the correct geometry of the rotor shaft part to be formed. The plurality of punches may be used in the same or different forging dies.

The method may also include an upsetting step which is the preliminary forging process that consists in the billet compression, creating a uniform material distribution in a longitudinal section, reducing variations in diameter. In this invention it may also be used to start and define the position of the punch entrance in the part. Other optional following step is the pre-forming that is an initial forging step used to reduce the die forging press force. The backward extrusion process could be initiated in this process.

During one of the backward extrusion process steps, an intern pin can be used to limit the internal diameter, helping to define the part final geometry and avoiding the bending of the rotor shaft part outer walls.

The backward extrusion can be done by the hot, warm or cold forging processes, but the preferred scope of this invention is the hot forging process, due to the reduction of pressing force.

There are several possibilities of materials to produce the rotor shafts, but the preferred materials used are carbon and alloy steels, especially low or medium alloyed steels due to its mechanical properties and possibility to use thermal treatments such as quenching and tempering or carburizing.

### Brief Description of Drawings

- FIG. 1a: is a diagram illustrating a cross sectional view of the forging method stage prior to an exemplary first stage of pressing;
- FIG. 1b: is a diagram illustrating a cross sectional view of the forging method stage after an exemplary first stage of pressing;
- FIG. 2a: is a diagram illustrating a cross sectional view of the forging method stage prior to an exemplary second stage of pressing;
- FIG. 2b: is a diagram illustrating a cross sectional view of the forging method stage after an exemplary second stage of pressing;
- FIG. 3a: is a diagram illustrating a cross sectional view of the forging method stage prior to an exemplary third stage of pressing;
- FIG. 3b: is a diagram illustrating a cross sectional view of the forging method stage after an exemplary third stage of pressing;
- FIG. 4a: is a diagram illustrating a cross sectional view of the forging method stage prior to an exemplary first stage of pressing, similar to that of FIG. 1a;
- FIG. 4b: is a diagram illustrating a cross sectional view of the forging method stage after an exemplary first stage of pressing, similar to that of FIG. 1b;
- FIG. 5a: is a diagram illustrating a cross sectional view of the forging method stage prior to an exemplary second stage of pressing, similar to that of FIG. 2a;
- FIG. 5b: is a diagram illustrating a cross sectional view of the forging method stage after an exemplary first stage of pressing, similar to that of FIG. 2b;
- FIG. 6a: is a diagram illustrating a cross sectional view of the forging method stage prior to an exemplary alternative third stage of pressing, which may be used instead of FIG. 3a;
- FIG. 6b: is a diagram illustrating a cross sectional view of the forging method stage after an exemplary alternative third stage of pressing, which may be used instead of FIG. 3b.
- FIG. 7a: is a diagram illustrating a cross sectional view of the forging method stage after an exemplary alternative third stage of pressing, which may be used instead of FIG. 3a or 6a.
- FIG. 7b: is a diagram illustrating a cross sectional view of the forging method stage after an exemplary alternative third stage of pressing, which may be used instead of FIG. 3b or 6b.
- FIG. 8a: is a diagram illustrating one possible assembly configuration of a rotor shaft using the rotor shaft parts manufactured by the method of the present disclosure.
- FIG. 8b: is a diagram illustrating one possible assembly configuration of a rotor shaft using the rotor shaft parts manufactured by the method of the present disclosure.
- FIG. 8c: is a diagram illustrating one possible assembly configuration of a rotor shaft using the rotor shaft parts manufactured by the method of the present disclosure.

### Detailed Description of the Figures

A billet 3 utilised for this method may have been formed, prior to insertion, into a regular shape using techniques which may include the heating and shearing of scrap material. This scrap material, and thus the final billet 3, may be steel or other such material capable of being utilised in a backward extrusion process.

Prior to the forging process a further, optional, preparatory step may be carried out to prepare the billet 3, for example using heating and shearing, for the punches used in the forging process. This further preparation step may include using a rebound technique with a small tooling penetration into the billet 3 such that an indentation may be made to help guide the initial punch into the billet 3.

Each figure of the exemplary method about to be described represents a possible stage of the forging process of the parts for a rotor shaft. The aim of each is to further press the material in each forging die such that the material takes the desired form of a part of the rotor shaft.

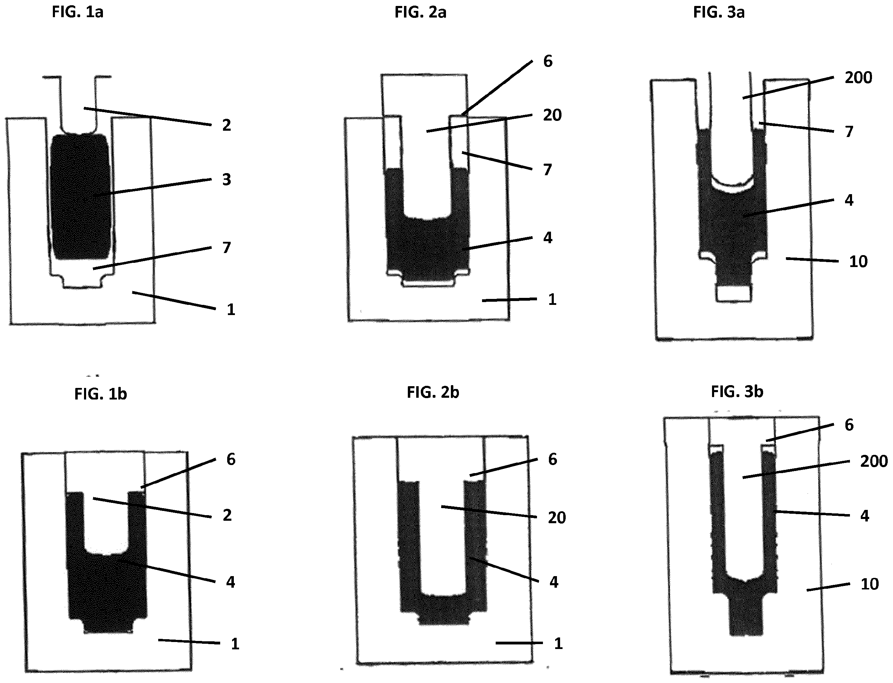

The exemplary method of forming at least one of the rotor shaft parts of the present disclosure is depicted in FIGs. 1a to 3b which will now be described. The method may begin by inserting a first billet 3, which may be cylindrical in shape, into a first forging die 1 as seen in FIG. 1a. The first forging die 1 may have a generally cylindrical shaped cavity 7 at the bottom of which may be a short impression. This short impression may have a diameter less than the total diameter of the cavity 7 within the first forging die 1. A first punch 2 may then be positioned above the exposed end of the first billet 3; this may be in line with the small tooling penetration of the rebound if such a preparatory process was used. Each forging die of the present disclosure is preferably a closed forging die.

The first punch 2 may have a regular shape with a main body diameter less than that than the total diameter of the cavity 7 within the first forging die 1; furthermore, the first punch 2 may have shoulders 6 which extend away from the main body and may be approximately equal to the diameter of the first forging die cavity 7. This will serve to stop material escaping from the forging die. The diameter of the first punch 2 main body may be comparable to the diameter of the short impression at the bottom of the first forging die 1. Furthermore, the length of the first punch 2 may be substantially less than the depth of the first forging die 1 such that when the punch is compressed into the first billet 3 the first punch 2 may extend only part of the way into the first billet 3. The length of each punch may be defined as the distance from the shoulder 6 of each punch to the point of deepest penetration into the forging die cavity 7, and thus each billet 3.

Once the first billet 3 has been inserted into the first forging die 1, and the first punch 2 has been positioned above the first billet 3, a compressive force may be applied to the exposed end of the first billet 3, through the open end of the first forging die 1, using the first punch 2 main body. This can be seen in FIG. 1b. As the first punch 2 main body is pressed into the first forging die 1 the first billet 3 moves further into the forging die until it contacts the bottom of the forging die. The main body of the first punch 2 may then continue to compress the first billet 3 such that backward extrusion occurs. This process of backward extrusion involves the forcing of some material of the first billet 3 to travel in the opposite direction to that of the pressing of the first punch 2, until it reaches the shoulders 6 of the first punch 2. Material of the first billet 3 may then conform to the geometry of the first forging die 1 and move around the first punch 2 main body forming a first rotor shaft part 4, which may be a rotor shaft flange. The pressing of the first punch 2, seen in FIGs. 1a and 1b, may then be stopped and removed.

Some advantages to using backward extrusion to form the rotor parts instead of machining are that tooling for backward extrusion is inexpensive in comparison to other processes like, for example, machining from a bar; thus allowing competitive mass production. Furthermore, backwards extrusion of the rotor parts allows complex shaft geometries to be manufactured in an easier manner than conventional methods. The parts formed by backward extrusion would also serve to increase safety tolerances of the rotor shaft by reducing the number of parts or assembly processes which may be needed to form a rotor shaft. The backward extrusion of the current disclosure may be hot, warm or cold backward extrusion as the user requires.

The first rotor shaft part 4 may remain in the first forging die 1 such that it is ready to receive subsequent punches which may be different from the first; conversely, the first rotor shaft part 4 may be transferred to another forging die prior to be pressed by a subsequent punch different from the first. Thus, it may be possible to use forging dies with different cavity geometries, as well as punches with different main body and shoulder 6 geometries, for every step of the method; for example between FIG. 1b and 2a or between FIG. 2b and 3a. For the purpose of this example the method shall describe a scenario in which the first forging die 1 remains the same for FIG. 1a to 2b. The forging dies for these stages are not intended to be limited to being the same and may be different from each other should the user choose; the forging dies of these stages are only being kept the same as an example.

The beginning of a second pressing step of the forging method may be depicted in FIG. 2a. The first punch 2, seen in FIGs. 1a and 1b, may have been replaced with a second punch 20 having a second geometry. This second geometry may preferably mean that the second punch 20 main body is extended as seen in FIG. 2a such that the outer walls of the first rotor shaft part 4 do not contact the shoulders 6 of the second punch 20 and a cavity 7 is again present within the first forging die 1.

The end of the second step may be seen in FIG. 2b. To transition from the stage seen in FIG. 2a to that seen in FIG. 2b the second punch 20 may press the material of the first rotor shaft part 4 again creating the same backwards extrusion process described in relation to FIG. 1b. This second punch 20 may serve to increase the first rotor shaft part 4 length by causing more material from the first rotor shaft part 4 to travel around the extended second punch 20 main body. Furthermore, the forging die and punch of each stage of this method may also serve to decrease the diameter of the rotor shaft part; for example each of the outer walls may have their thickness reduced to that desired by the user or the diameter of the material forced into the forging die impression may be reduced. The preferable final thickness of the rotor shaft outer walls may be between 3mm and 20mm depending on the desired use. It may be preferable that the final thickness of the walls be within the range 5mm to 15mm and most preferably between 7mm to 10mm, in particular 8mm.

FIG. 3a depicts the beginning of a possible final stage of the example forging method of the present disclosure. The first rotor shaft part 4 may be removed from the first forging die 1 of FIG. 2b and inserted into a second forging die 10 shown in FIG. 3a. This second forging die 10 may, along with the other forging dies, be used to extend the first rotor shaft material into a narrower and longer impression which may be located at the bottom of the cavity in the second forging die 10. The second forging die 10 may also, in combination with a third punch 200, be used to further extend the length of the first rotor shaft part 4. The main body of the third punch 200 may have an increased length and diameter in comparison to previous punches used at previous stages of the forging method. This will allow the outer walls of the first rotor shaft part 4 to be reduced in thickness, as previously described, as well as allowing the material to be backwardly extruded further; thus extending the overall length of the first rotor shaft part 4.

The final stage of this example forging method for a first rotor shaft part 4 is seen within FIG. 3b. In this stage the third punch 200, previously described in relation to FIG. 3a, is pressed into the first rotor shaft part 4 which was previously inserted into a second forging die 10. This pressing of the third punch 200 into the first rotor shaft, causing backward extrusion, may have the same effect as the pressing which has taken place in the stages seen in and described by FIGs. 1b and 2b. The final first rotor shaft part 4 may, using this final step, have outer walls which maintain a constant diameter of rotor shaft along the length of the part as seen in FIG. 3b.

The described method may also be utilised to form a second rotor shaft part of the same design or slightly different if for example a longer length for the second part were desired; this would involve using different forging dies and punches for with the same method. This forming of a second rotor shaft part using the same method as above may be carried out simultaneously with the forming of the first rotor shaft part 4 or subsequently depending on the desires of the user or the number of forging dies and punches available.

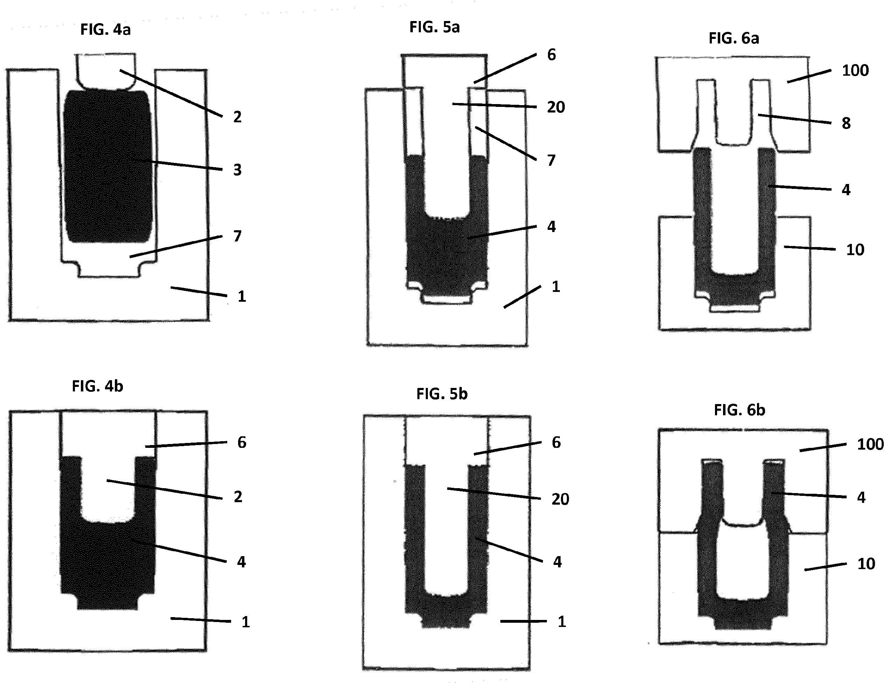

The example method, as described above, may be altered slightly in the final two stages to produce final first and/or second rotor shaft parts of slightly differing design. These alternative rotor shaft parts differ from those described above as they may lack outer walls which maintain a constant diameter of rotor shaft along the length of the rotor shaft part. The stages seen in FIGs. 4a to 5b may also differ from those of FIGs. 1a to 2b such that the first rotor shaft part may also have a different design e.g. different diameter (in the outer walls and/or in the flange), different length etc. In one example case, not only the final two stages would be different, but all of the forging stages could be different. E.g. Different parts may be forged with different tools, but may also use the same forging steps of upsetting/pre-forming, initial backward extrusion and a final backward extrusion and/or diameter reduction of the rotor shaft part.

The example method will now be described using FIGs. 4a to 6b in comparison with FIGs. 1a to 3b. Stages depicted by FIGs. 4a to 5b may differ from those of FIGs. 1a to 2b in the size and shape of the forging dies and punches, if so desired, such that a slightly different shaped first rotor shaft part 4 is produced prior to the final stages. For the purpose of this example however the stages depicted by FIGs. 4a to 5b, which may be the same or different as those previously described FIGs. 1a to 2b, will remain the same and as such further description of these stages will be omitted.

The transition from FIG. 5b to FIG. 6a may be the same as the transition from FIG. 2b to FIG. 3a in that, the first rotor shaft part 4 may be removed from the first forging die 1 of FIG. 5b and inserted into a second forging die 10 shown in FIG. 6a. Alternatively from the second forging die 10 of FIG. 3a however, the cavity of the second forging die 10 seen in FIG. 6a may extend only partially up the outer walls of the first rotor shaft part 4. This may allow the outer walls of the first rotor shaft part 4 to protrude from the second forging die 10. In the step demonstrated by FIG. 6a an upper forging die 100 may be positioned to oppose the second forging die 10 such that the cavities of each are opposite each other. The second forging die 10 may be designed, as may any of the dies, to further extend the material of the first rotor shaft part 4 into an impression at the bottom of its cavity 7. The upper forging die 100 may be designed such that two cavities 8 may be present which correspond to the thickness and length of the first rotor shaft part 4 outer walls which protrude from the second forging die 10. These two cavities 8 may be slightly offset from the protruding outer walls of the first rotor shaft part 4 and may have angled corners at the entrance of the cavities. The cavities in the upper forging die 100 may be inwardly offset, such that the diameter of the rotor shaft which protrudes the second forging die 10 decreases, or outwardly offset, such that the diameter of the rotor shaft which protrudes the second forging die 10 increases. An internal pin can be used between the cavities, seen in FIGs. 6a and 6b, to limit the internal diameter, helping to define the part final geometry and avoiding the bending of the rotor shaft part outer walls.

FIG. 6b shows the final stage of this method wherein the upper forging die 100 is pressed towards the second forging die 10 until the two abut. During this pressing the outer walls of the first rotor shaft part 4 are forced into the offset cavities 8 in the upper forging die 100; thus causing the diameter of the rotor shaft part to increase or decrease from the point at which the outer walls of the first rotor shaft part 4 protrude from the second forging die 10. The upper forging die 100 described in relation to FIGs. 6a and 6b, may alternatively, be another punch designed to provide the same effect as that of the upper forging die 100 while further providing a longer punch main body between the offset cavities. If a punch is used with a similar design to that of the upper forging die (100 the cavities 8 within the punch, which oppose the second forging die 10, may be deeper than the length at which the outer arms protrude from the second forging die 10. This allows backward extrusion to occur in the final stage, FIG. 6B, simultaneously as the outer walls of the rotor shaft part are forced into the offset cavities.

The described alternative method steps seen in FIG. 6a and 6b may also be utilised to form a second rotor shaft part of the same design (decreasing diameter rotor shaft part) or opposite (increasing diameter rotor shaft part) or different design such as being longer or having a different diameter/width; if different shaped punches and forging dies are used in the prior steps. This forming of a second rotor shaft part using the same method as above may be carried out simultaneously with the forming of the first rotor shaft part 4, or subsequently, depending on the desires of the user or the number of forging dies and punches available.

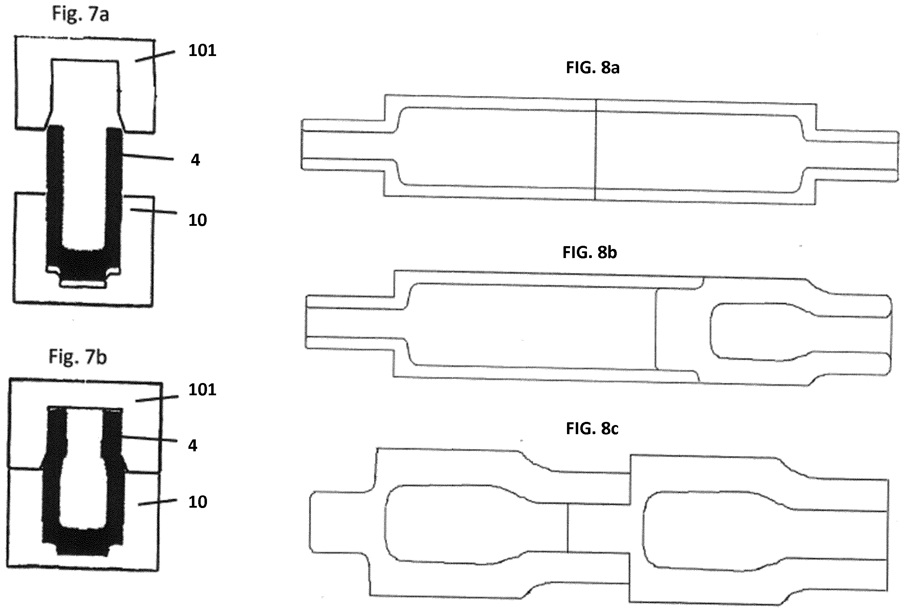

FIGs. 7a and 7b are alternatives to the stages of FIGs. 6a and 6b as previously described. FIGs. 7a and 7b differ in that the upper forging die 100 seen in FIGs. 6a and 6b is replaced with an alternative second upper forging die 101 which may not have the internal pin between two cavities 8; such that only a single cavity is present in the second upper forging die 101. The method step of pressing the upper forging die until it abuts with the second forging die, such that the outer walls are forced to change shape, does not change. FIGs. 7a and 7b are therefore alternative examples of a possible different shaped second upper forging die 101 which may be used to force the outer walls of the rotor shaft part to change shape.

During simultaneous production the billets 3, and rotor shaft parts that are formed at each stage, may be moved from one set of dies to the next as they undergo each individual step. The forging dies may all be pressed at the same time using a single pressing machine each at a different step in the process, and subsequently moved onto the next step. The rotor shaft part which reaches the fully formed state at either the stage seen in FIG. 3b, FIG. 6b or FIG. 7b may be removed once the final stage has been performed.

After the first rotor shaft parts 4 have been formed using the described method it is optional, or may be desirable, for the user to finish the part by machining. This may include, but is not limited to, using machining techniques to provide a through hole in the bottom of the final rotor shaft parts. The rotor shaft parts may have a "tuning fork" like cross section. Other machining techniques which may be used to finish the rotor shaft parts may include such techniques as grinding, turning, drilling or other appropriate techniques.

Although the example method with alternate final stages have been described as having 3 main stages, designated 1/4, 2/5 and 3/6/7, it should be understood that the same method may be carried out using only one stage. For example the pressing of a single punch into a billet 3 which has been inserted into a forging die to form first and/or second rotor shaft parts may be utilised in place of the above method if the forging die and punch are so configured to produce the final desired form of the rotor shaft part. This would eliminate the need for intermediate stages; thus reducing the cost of manufacturing as well as the number of forging dies and punches that are needed for the process. Conversely, the described method seen in the figures may have further intermediate stages which could be used to provide more complex shapes of rotor shaft parts and achieve adequate penetration of the punches into the billet 3 or the formed rotor shaft part. A further advantage that providing a number of intermediate stages would bring would be that the wear on the punch at each stage would be reduced; thus allowing the lifespan of each of the punches to be increased. In light of the options described, wherein a single or multiple stages may be employed, it should be understood that the pressing method of forming a plurality of rotor shaft parts using backward extrusion may be carried out using at least one punch and at least one forging die.

The first and second rotor shaft part designs as seen in FIGs. 3b, 6b or 7b may be joined together to form a complete rotor shaft using any joining technique and in a number of combinations as demonstrated by FIGs. 8a to 8c. For example two rotor shaft parts wherein the outer walls of rotor shaft parts of equal diameter abut at the ends of the outer walls may be joined together; as demonstrated by FIG. 8a. These parts, with matching diameter and direct abutment, may be joined together directly. Possible methods of joining the rotor shaft parts directly may include welding the two parts together, press-fitting one inside the other or frictionally fitting using knurling. This joining of rotor shaft parts, wherein the outer walls of rotor shaft parts of equal diameter abut at the ends of the outer walls, may also arise if the second rotor shaft part (the right side par of FIG. 8c) were rotated 180 degrees; thus allowing the joining of the two parts similarly to FIG. 8a.

An alternative example configuration may utilise the rotor shaft part seen in FIG. 6b or 7b, whose outer walls provide a rotor shaft part with changing diameter, may be press-fit inside the rotor shaft part seen in FIG. 3b, whose outer walls provide a constant diameter rotor shaft part. This may be seen in FIG. 8b, wherein a through hole may be present in the protrusion, of the second rotor shaft part (the right side part in FIG. 8b), which is press fit into the cavity of the first rotor shaft part (the left side part in FIG. 8b). Alternatively, the second rotor shaft part (the right side part in FIG. 8b) may be rotated and press fit into the first rotor shaft part (the left side part in FIG. 8b) such that the two outer walls are press fit into the first rotor shaft piece (the left side part in FIG. 8b). The inverse may be true if the rotor shaft part seen in FIG. 6b and 7b were designed to have outer walls which increased the diameter of the rotor shaft. In this case the rotor shaft part of FIG. 3b may be press-fit inside that of the rotor shaft seen in a modified version of FIG.6b or 7b; this configuration is not shown by a Figure.

FIG. 8c demonstrates an example where two parts, as seen in FIGs. 6b or 7b, can be joined together using the narrow diameter produced by the two outer walls and press fitting the protrusion seen on the opposite end of the part between the outer walls.

The completed rotor shaft manufactured by the method of present disclosure may be hollow. A hollow rotor shaft would provide the advantage of reducing the weight and could include also the possibility of improving the lubrication using a configuration similar to a water jacket. The example configurations shown in FIGs. 8a to 8c are not designed to be limiting and only serve as possible combinations chosen, from a number of possible finite combinations, to demonstrate the joining principle of the rotor shaft parts. It should be understood that any of the parts produced by the present disclosure can be joined together.

Once the rotor shaft parts, produced as shown in the figures, or combined with other parts, are joined together, either directly or indirectly, they will form at least part of a complete rotor shaft. This rotor shaft may then be employed as part of a motor, preferably an electric motor, which may further comprise at least a stator and rotor mounted on the previously formed rotor shaft.

### Reference Numerals

- 1: First Forging Die
- 2: First Punch
- 3: Billet
- 4: First Rotor Shaft Part
- 6: Punch Shoulder
- 7: Forging Die Cavity
- 8: Upper Forging Die Cavities
- 10: Second Forging Die
- 20: Second Punch
- 100: Upper Forging Die
- 101: Second Upper Forging Die
- 200: Third Punch

## Claims

1. A forging method for the manufacture of at least one of a plurality of parts of a rotor shaft comprising the steps of:
inserting a first billet into at least one forging die;
pressing the first billet with at least one punch to form a first rotor shaft part, having outer walls, using backward extrusion of the first billet material around the at least one punch.

2. The method according to claim 1 further comprising the step of forming a second rotor shaft part using similar or the same method steps as the manufacture of the first rotor shaft part.

3. The method of any one of the preceding claims further comprising the step of pressing the first and/or second billets within the first forging die with a plurality of punches which increase in length and/or diameter.

4. The method of any one of the preceding claims further comprising the step of pressing the first and/or second billets within a plurality of forging dies whose cavity may increase or decrease in length and/or diameter.

5. The method according to claim 4 wherein at least one punch is used.

6. The method of any one of the preceding claims further comprising the step, prior to inserting the billet into the first forging die, of preparing the end of each billet to be pressed using an upsetting and/or pre-forming technique.

7. The method of any one of the preceding claims further comprising the steps of removing the first rotor shaft part from the first forging die,
inserting the first rotor shaft part into a second forging die wherein the second forging die extends partially up the outer walls of the first rotor shaft part.

8. The method of claim 7 further comprising the step of pressing the first rotor shaft part with a further punch or further forging die to narrow or increase the distance between the outer walls which protrude from the second forging die.

9. The method of any one of the preceding claims further comprising the step of pressing at least one punch into the first and second billets until the outer walls of the first and second rotor shaft parts have a thickness of 3mm to 20mm, preferably 5mm to 15mm, most preferably 7mm to 10mm.

10. The method of any one of the preceding claims further comprising the step that a final forging step is used to reduce and/or increase the diameter of outer walls of at least one of the rotor shaft parts.

11. The method of any one of the preceding claims further comprising the step that after the first and/or second rotor shaft parts are formed, each rotor shaft part is pre-finished and/or finished by machining.

12. The method of any one of the preceding claims further comprising the step of joining the two rotor shaft parts together directly.

13. The method of claim 12 further comprising the step of joining the rotor shaft parts by welding and/or knurling and/or press fitting.

14. A rotor shaft assembled from at least the two rotor shaft parts of any of the preceding claims.

15. An electric motor comprising at least, a stator and rotor which is mounted on the rotor shaft of claim 14.
